Europäisches Patentamt

European Patent Office

Office européen des brevets

(11) Veröffentlichungsnummer: **0 317 966**
**A1**

## (12) EUROPÄISCHE PATENTANMELDUNG

(21) Anmeldenummer: 88119454.2

(22) Anmeldetag: 23.11.88

(51) Int. Cl.⁴: **B60P 3/32**

(30) Priorität: 26.11.87 DE 3740028
09.08.88 DE 3826964
09.09.88 DE 3830638

(43) Veröffentlichungstag der Anmeldung:
**31.05.89 Patentblatt 89/22**

(84) Benannte Vertragsstaaten:
**AT BE CH DE ES FR GB GR IT LI LU NL SE**

(71) Anmelder: **Gabler, Theodor**

**D-8431 Sippelmühle(DE)**

(72) Erfinder: **Gabler, Theodor**

**D-8431 Sippelmühle(DE)**

(74) Vertreter: **Graf, Helmut, Dipl.-Ing. et al**
**Greflinger Strasse 7 Postfach 382**
**D-8400 Regensburg(DE)**

(54) **Strassenfahrzeug.**

(57) Die Erfindung bezieht sich auf ein Straßenfahrzeug bestehend aus einem Basisfahrzeug, welches an einem ersten Rahmen (3) einen Antriebsmotor sowie wenigstens zwei Achsen aufweist, von denen wenigstens eine Achse angetrieben und die vordere Achse lenkbar ist, sowie aus einem Fahrzeugteil (2), welches zumindest mit einem Teil eines zweiten Rahmens (7) starr am ersten Rahmen befestigbar ist. Die Erfindung ist dadurch gekennzeichnet, daß auf dem ersten Rahmen des Basisfahrzeuges ein Zurückseil des Basisfahrzeuges hin offener Hilfsrahmen (11) vorgesehen ist, in welchen von der Rückseite des Basisfahrzeuges her der zweite Rahmen mit einem sich im Bereich der Vorderseite des Fahrzeugteils (7) verjüngenden oder spitz zulaufenden Ende einführbar ist und welcher bei am Basisfahrzeug befestigtem Fahrzeugteil den zweiten Rahmen zumindest an seinem Rahmenteil formschlüssig aufnimmt, und daß der Hilfsrahmen (11) zumindest an seinem offenen Ende eine über die gesamte Breite des Hilfsrahmens sich erstreckende, im wesentlichen horizontale Auflage- bzw. Gleitfläche für die Unterseite des zweiten Rahmens bzw. für den mit dem Hilfsrahmen zusammenwirkenden Rahmenteil dieses zweiten Rahmens aufweist.

Fig.3

## Straßenfahrzeug

Die Erfindung bezieht sich auf ein Straßenfahrzeug gemäß Oberbegriff Patentanspruch 1 und dabei speziell auf ein Wohnmobil bzw. auf einen Motorcaravan.

Bekannt sind einachsige, aber auch zweiachsige Wohnwägen der unterschiedlichsten Ausführung, die an Personenkraftwagen ankuppelbar sind. Derartige aus einem Personenkraftwagen und einem nachgezogenen Wohnwagen bestehende Wohnwagengespanne haben zwar den grundsätzlichen Vorteil, daß der Wohnwagen am Zielort beispielsweise auf einem, Campingplatz abgestellt werden kann und für Fahrten am Zielort (z.B. Ausflugsfahrten usw.) der Personenkraftwagen zur Verfügung steht. Nachteilig ist jedoch, daß Wohnwagengespanne bekanntermaßen in ihren Fahreigenschaften sehr unstabil und vor allem schleuder- und kippanfällig sind, so daß auch aus diesen Gründen Wohnwagengespanne nur für eine relativ geringe maximale Fahrgeschwindigkeit zugelassen sind.

Bekannt sind weiterhin Wohnmobile bzw. Motorcaravans, bei denen der Wohnaufbau fest auf einem Fahrzeugrahmen montiert ist. Dieses System hat zwar gegenüber Wohnwagengespannen den Vorteil wesentlich verbesserter Fahreigenschaften so daß hier auch höhere Fahrgeschwindigkeiten möglich und zugelassen sind, nachteilig ist aber, daß am Zielort außer evtl. mitgeführten Fahrrädern oder Kleinkrafträdern kein Fahrzeug und insbes. auch kein eigener Personenkraftwagen zur Verfügung steht. Um diesen Nachteil zu beheben, wurde auch schon vorgeschlagen, den Wohnaufbau bei derartigen Motorcaravans lösbar bzw. abkuppelbar am Fahrzeugrahmen vorzusehen. Der Wohnaufbau kann dann am Zielort auf Stützen stehend abgestellt werden, do daß das Fahrzeug ohne den Wohnaufbau für Fahrten am Zielort zur Verfügung steht. Bei diesem letzt genannten System ist aber das Trennen des Wohnaufbaus vom Fahrzeug sowie das Verbinden des Wohnaufbaus mit dem Fahrzeug äußerst problematisch und umständlich, und zwar insbes. auch bei unebenem Gelände und engen Platzverhältnissen. Speziell bei beengten Platzver hältnissen ist es oftmals auch nicht möglich, den Wohnaufbau in der gewünschten Weise abzustellen, da sich dieser nach dem Trennen vom Fahrzeug nicht mehr gewegen läßt und außerdem zum Trennen des Wohnaufbaus vom Fahrzeug bzw. zum Befestigen des Wohnaufbaus am Fahrzeug relativ viel Platz für das hierbei notwendige Bewegen des Fahrzeugs erforderlich ist. Außerdem ist mit den Stützen ein stabiles Abstellen des in der Regel sehr schweren Wohnaufbaus nicht gewährleistet.

Aufgabe der Erfindung ist es, ein Straßenfahrzeug aufzuzeigen, welches bei miteinander verbundenem Basisfahrzueg und Fahrzeugteil ein starres System und damit ein Fahrzeug mit guten Fahreigenschaften bildet und welches ein einfaches und problemloses Ab- sowie Ankuppeln des Fahrzeugteiles vom bzw. an das Basisfahrzeug gestattet.

Zur Lösung dieser Aufgabe ist ein Straßenfahrzeug entsprechend dem kennzeichnenden Teil des Patentanspruches 1 ausgebildet.

Das neuerungsgemäße Straßenfahrzeug zeichnet sich u.a. durch ein besonders einfaches Abkoppelt des Fahrzeugteils vom Basisfahrzeug, insbesondere aber durch ein besonders einfaches Ankoppeln des Fahrzeugteils an das Basisfahrzeug aus, wobei dieses An- und Abkoppeln selbst von ungeübten Personen leicht durchgeführt werden kann. Durch die Verbindung des Basisfahrzeugs mit dem Fahrzeugteil unter Verwendung des am Basisfahrzeug vorgesehenen Hilfsrahmens und des am Fahrzeugteil vorgesehenen zweiten Rahmens bzw. durch die Ausbildung dieser beiden Rahmen ist es bei fahrbarer Ausbildung des vom Basisfahrzeug abgekoppelten Fahrzeugteils möglich, beim Ankoppeln des Fahrzeugteils am Basisfahrzeug zunächst den zweiten Rahmen des Fahrzeugteils mit seinem spitz zulaufenden vorderen Ende in das offene Ende des Hilfsrahmens derart einzuführen, daß das vordere Ende des zweiten Rahmens auf der am offenen Ende des Hilfsrahmens gebildeten Auflagefläche aufliegt, wobei dann mit Hilfe des am zweiten Rahmen des Fahrzeugteils befestigten Zugseils einer am Basisfahrzeug vorgesehenen Seilwinde mit dem sich vorwärts bewegenden Basisfahrzeug das Fahrzeugteil solange nachgezogen wird, bis sich das Basisfahrzeug und das Fahrzeugteil in einer Linie befinden, so daß dann anschließend durch Betätigung der Seilwinde der zweite Rahmen des Fahrzeugteils ohne Verklemmen in den Hilfsrahmen des Basisfahrzeugs hineinbewegt bzw. hineingezogen werden kann, um die starre und formschlüssige Verbindung zwischen dem Basisfahrzeug und dem Fahrzeugteil herzustellen.

Ein weiterer wesentlicher Vorteil des erfindungsgemäßen Fahrzeugs besteht darin, daß der Hilfsrahmen auf dem ersten Rahmen des Basisfahrzeugs vorgesehen ist, d.h. über diesen ersten Rahmen des Basisfahrzeugs nach oben vorsteht, so daß für das Basisfahrzeug ein herkömmliches Fahrzeug ohne Umbau seines Fahrzeugrahmens (erster Rahmen) verwendet werden kann, wobei dann auch die gesamte Fläche des Basisfahrzeugs hinter dem Führerhaus auf ihrer gesamten Länge und ihrer gesamten Breite für das am Basisfahrzeug angekoppelte Fahrzeugteil zur Verfügung steht bzw. von diesem Fahrzeugteil eingenommen werden kann, insoweit also eine optimale Ausnutzung der für Fahrzeuge zulässigen Breite insbesondere auch für das Fahrzeugteil erhalten wird. Bei dem erfindungsgemäßen Straßenfahrzeug sind sämtliche die starre Verbindung zwischen dem Basisfahrzeug und dem Fahrzeugteil herstellenden Elemente an der Unterseite des Fahrzeugteils bzw. des Aufbaus dieses Fahrzeugteils, und zwar bei am Basisfahrzeug angekoppeltem Fahrzeugteil zwischen diesem Fahrzeugteil und dem darunter angeordneten ersten Rahmen des Basisfahrzeugs vorgesehen.

Da bei dem erfindungsgemäßen Straßenfahrzeug als Basisfahrzeug ein herkömmliches Fahrzeug (ohne Aufbau) ohne Änderung des Fahrzeugrahmens (erster Rahmen) Verwendung finden kann und außerdem für das An- und Abkuppeln auch kein Anheben oder Absenken von Achsen des Basisfahrzeuges erforderlich ist, ist bei dem erfindungsgemäßen Straßenfahrzeug für das Basisfahrzeug neben dem bevorzugten Vorderradantrieb auch ein Hinterradantrieb, insbesondere auch ein Allradantrieb möglich.

Bei einer Ausführungsform des erfindungsgemäßen Straßenfahrzeugs weist das Fahrzeugteil eine dritte, nicht lenkbare Achse mit wenigstens zwei Rädern auf, wobei am Basisfahrzeug angekuppeltem Fahrzeugteil die zweite Achse (Hinterachse) des Basisfahrzeugs sowie die dritte Achse bzw. die diese Achsen bildenden Räder unmittelbar nebeneinander in einem Rad- bzw. Achsabstand angeordnet sind, der um ein Vielfaches kleiner ist als der Abstand zwischen der ersten und zweiten Achse des ersten Fahrzeugteils, d.h. der Achsabstand zwischen der zweiten und dritten Achse ist kleiner als 100 Zentimeter, vorzugsweise kleiner als 90 Zentimeter. Durch diesen geringen Rad- bzw. Achsabstand der Hinterachse des Basisfahrzeugs und der am Fahrzeugteil vorgesehenen dritten Achse können diese Achsen bzw. die diese Achsen bildenden Räder als ungelenkte Achsen bzw. Räder ausgeführt werden. Hierdurch ergibt sich neben einer einfachen Konstruktion vor allem auch ein einfaches Fahren des Straßenfahrzeuges. Weiterhin sind durch die starre Verbindung der beiden Fahrzeugteile sowie durch den erwähnten geringen Achsabstand auch keine Betriebsbremsen für das Fahrzeugteil notwendig, d.h. dieses ist entweder völlig ohne Bremsen ausgerüstet oder besitzt allenfalls eine Hand-bzw. Parkbremse, die nur beim Abkuppeln bzw. Abstellen des Fahrzeugteils benötigt wird.

Dadurch, daß das Fahrzeugteil eine eigene Achse mit wenigstens zwei Rädern aufweist, ist nicht nur ein sicheres Abstellen dieses Fahrzeugteils gewährleistet, sondern das Fahrzeugteil ist auch im vom Basisfahrzeug abgekoppelten Zustand bewegbar, so daß nicht nur ein einfaches An- und Abkuppeln, sondern vor allem auch ein einfaches, optimales Abstellen des Fahrzeugteils selbst bei beengten Platzverhältnissen und im unebenen Gelände möglich sind. ·

Bei einer anderen Ausführungsform der Erfindung sind am Fahrzeugteil in ihrer Länge verstellbare und jeweils wenigstens ein Rad aufweisende Stützen vorgesehen, die aus einer Gebrauchsstellung in eine Nichtgebrauchsstellung schwenkbar sind. Nach der Trennung zum Basisfahrzeug wird das Fahrzeugteil auf den in ihre Gebrauchsstellung übergeführten bzw. geschwenkten Stützen abgestellt. Zum Verbinden des abgestellten Fahrzeugteils mit dem Basisfahrzeug wird letzteres mit seiner Rückseite im Bereich der Vorderseite des Fahrzeugteils bzw. im Bereich der Vorderseite des an diesem Fahrzeugteil vorgesehenen zweiten Rahmens positioniert. Vorzugsweise mit Hilfe der Seilwinde wird der Rahmen des Fahrzeugteils nach entsprechender Höheneinstellung der Stützen in den zur Rückseite des Fahrzeugteils maulartig offenen Hilfsrahmen eingeführt, wobei sich das Fahrzeugteil mit den an seinen Stützen vorgesehenen Rädern auf das Basisfahrzeug zubewegt. Sobald der Rahmen des Fahrzeugteils genügend weit in den Hilfsrahmen des Basisfahrzeugs eingreift, werden die vorderen Stützen in die Nichtgebrauchsstellung geschwenkt. Nach dem endgültigen Einführen des Rahmens des Fahrzeugteils werden schließlich auch die hinteren Stützen in ihre Gebrauchsstellung geschwenkt. Durch den den Rahmen des Fahrzeugteils formschlüssig umfassenden Hilfsrahmen des Basisfahrzeugs ist auch bei dieser Ausführungsform das Fahrzeugteil formschlüssig am Rahmen des Basisfahrzeugs gehalten, so daß dieses wiederum zusammen mit dem Fahrzeugteil eine feste Einheit bildet. Auch bei dieser Ausführungsform ist es wiederum möglich, bei in den Hilfsrahmen eingeführten und mit seinem vorderen Ende auf der Auflagefläche des Hilfsrahmens aufliegenden Rahmen des Fahrzeugteils eine Ausrichtung des Basisfahrzeuges sowie des Fahrzeugteils in einer Linie hintereinander dadurch zu erreichen, daß das Basisfahrzeug mit dem verbundenen Fahrzeugteil um einen bestimmten Weg vorgefahren wird.

Zum Abstellen bzw. Abkoppeln des Fahrzeugteils vom Basisfahrzeug werden zunächst die hinteren Stützen des Fahrzeugteils aus der Nichtgebrauchsstellung in die Gebrauchsstellung bewegt. Anschließend wird nach ggf. erfolgter Höheneinstellung dieser hinteren Stützen sowie bei gebremsten Rädern an diesen Stützen das Basisfahrzeug langsam vorwärts bewegt, so daß der Rahmen des Fahrzeugteils zunehmend aus dem Hilfsrahmen des Basisfahrzeugs herausgleitet. Bevor eine vollständige Trennung des Rahmens des Fahrzeugteils vom Hilfsrahmen des Basis fahrzeugs erfolgt, werden die vorderen Stützen des Fahrzeugteils in die Gebrauchsstellung geschwenkt bzw. bewegt und ggf. in ihrer Höhe so eingestellt, daß diese Stützen mit ihren Rädern ebenfalls auf dem Untergrund bzw. Boden aufstehen. Von dem nun auf seinen Stützen stehenden Fahrzeugteil kann das Basisfahrzeug vollständig wegbewegt werden. Um sicherzustellen, daß eine vollständige Trennung des Rahmens des Fahrzeugteils vom Hilfsrahmen des Basisfahrzeugs erst dann erfolgt, wenn die vorderen Stützen des Fahrzeugteils tatsächlich in die Gebrauchsstellung geschwenkt sind, sind an diesen vorderen Stützen Sicherheitsanschläge, bevorzugt in Form von Rast- oder Sicherheitszapfen vorgesehen, die bei in Nichtgebrauchsstellung befindlichen vorderen Stützen im Bewegungsraum jeweils eines Gegenanschlags am Hilfsrahmen des Basisfahrzeugs liegen und dadurch eine vollständige Trennung des Rahmens des Fahrzeugteils vom Hilfsrahmen des Basisfahrzeugs solange verhindern, bis nach dem Schwenken der vorderen Stützen aus ihrer Nichtgebrauchsstellung in die Gebrauchsstellung diese Sicherheitsanschläge aus dem Bewegungsraum der zugehörigen Gegenanschläge herausbewegt sind.

Bei einer bevorzugten Ausführungsform der Erfindung weist der zweite Rahmen am Fahrzeugteil ein U- oder C-förmiges Querschnittsprofil auf oder ist von wenigstens zwei U-Schienen gebildet. Hierdurch wird eine besonders stabile Ausführung für diesen zweiten Rahmen erreicht, der dann letztlich auch das eigentliche, tragende Element für das Fahrzeugteil ist, so daß dieser Rahmen des Fahrzeugteils, der für die starre Verbindung zwischen Fahrzeugteil und Basisfahrzeug dient, zugleich auch den tragenden Rahmen des Fahrzeugteils bildet, wodurch sich eine besonders einfache und kompakte Konstruktion ergibt.

Bei dem erfindungsgemäßen Straßenfahrzeug weist das Fahrzeugteil beispielsweise einen Wohnaufbau auf, so daß in diesem Fall das erfindungsgemäße Straßenfahrzeug die Vorteile herkömmlicher Wohngespanne und Motorcarawans bei gleichzeitiger Vermeidung der Nachteile dieser beiden bekannten Systeme verbindet, d.h. im zusammengekoppelten Zustand bilden Basisfahrzeug und Fahrzeugteil ein Straßenfahrzeug mit sehr guten Fahreigenschaften, welches auch hohe Fahrgeschwindigkeiten zuläßt. Am Zielort kann das Fahrzeugteil vom Basisfahrzeug abgekoppelt werden, so daß dort das Basisfahrzeug für Fahrten zur Verfügung steht, ohne daß der Wohnaufbau mitgeführt werden muß.

Das Fahrzeugteil kann aber auch als Pritsche, Container, Verkaufsaufbau, Bootsträger usw. ausgebildet sein.

Weiterbildungen der Erfindung sind Gegenstand der Unteransprüche.

Die Erfindung wird im Folgenden anhand der Figuren an Ausführungsbeispielen näher erläutert. Es zeigen:

Fig. 1 in vereinfachter Darstellung und in Teil-Seitenansicht das den Antriebsmotor aufweisende Basisfahrzeug, zusammen mit dem an dieses Basisfahrzeug angekoppelten, mit unterbrochenen Linien angedeuteten Fahrzeugteil bei einer ersten Ausführung der Erfindung;

Fig. 2 in Teilansicht sowie in Draufsicht das Straßenfahrzeug gemäß Fig. 1;

Fig. 3 in vereinfachter Darstellung sowie in Teil-Seitenansicht das Fahrzeugteil des erfindungsgemäßen Straßenfahrzeugs nach Fig. 1, und zwar zusammen mit dem in dieser Figur mit unterbrochenen Linien wiedergegebenen Basisfahrzeug;

Fig. 4 in vereinfachter perspektivischer Prinzip-Darstellung die zum starren Ankuppeln bzw. Verbinden der beiden Fahrzeugteile dienenden und an diesen vorgesehenen Elemente;

Fig. 5 einen Schnitt entsprechend der Linie I-I der Fig. 2;

Fig. 6 in Seitendarstellung eine der am Fahrzeugteil vorgesehenen Stützen, zusammen mit den diese Stütze in der Arbeitsposition sichernden Elementen;

Fig. 7 in vereinfachter Darstellung eine Draufsicht auf den Rahmen des Fahrzeugteils, zusammen mit einer Seilzuganordnung, die beim Ankuppeln des Fahrzeugteils und das Basisfahrzeug die Stützen nach Fig. 6 entriegelt;

Fig. 8 und 9 jeweils in vergrößerter Detaildarstellung das untere, in der Länge verstellbare Ende bzw. ein an diesem Ende vorgesehenes Laufrad einer Stütze nach Fig. 6;

Fig. 10 und 11 in vereinfachter Darstellung das Basisfahrzeug in Seitenansicht sowie in Draufsicht von oben, bei einer weiteren Auführungsform der Erfindung;

Fig. 12 und 13 in vereinfachter Darstellung sowie in Seitenansicht sowie von unten her gesehen, einen an das Basisfahrzeug ankuppelbaren Fahrzeugteil in Form eines Wohnwagen-Aufbaus, wobei in der Fig. 12 das Basisfahrzeug mit unterbrochenen Linien wiedergegeben und der Wohnwagen-Aufbau in seinem an dem Basisfahrzeug angekoppelten Zustand wiedergegeben ist;

Fig. 14 in Seitenansicht den Wohnwagen-Aufbau zusammen mit einer Teildarstellung des Basisfahrzeugs, bei von dem Basisfahrzeug abgekuppelten Wohnwagen-Aufbaus;

Fig. 15 und 16 in vereinfachter Darstellung das Basisfahrzeug in Seitenansicht sowie in Draufsicht bei einem durch eine Persenning oder eine Plane abgedecktem hinteren Rahmen des Basisfahrzeugs;

Fig. 17 in vereinfachter perspektivischer Darstellung die zum starren Verbinden des Basisfahrzeugs mit dem Fahrzeugteil bzw. dem Wohnwagen-Aufbau dienenden Elemente;

Fig. 18 und 19 in einer perspektivischen Einzeldarstellung bzw. in einer Einzeldarstellung entsprechend dem Pfeil A eines der Stützräder des Wohnwagen-Aufbaus;

Fig. 20 und 21 in Seitenansicht ein als Pritsche bzw. als Container ausgebildetes Fahrzeugteil.

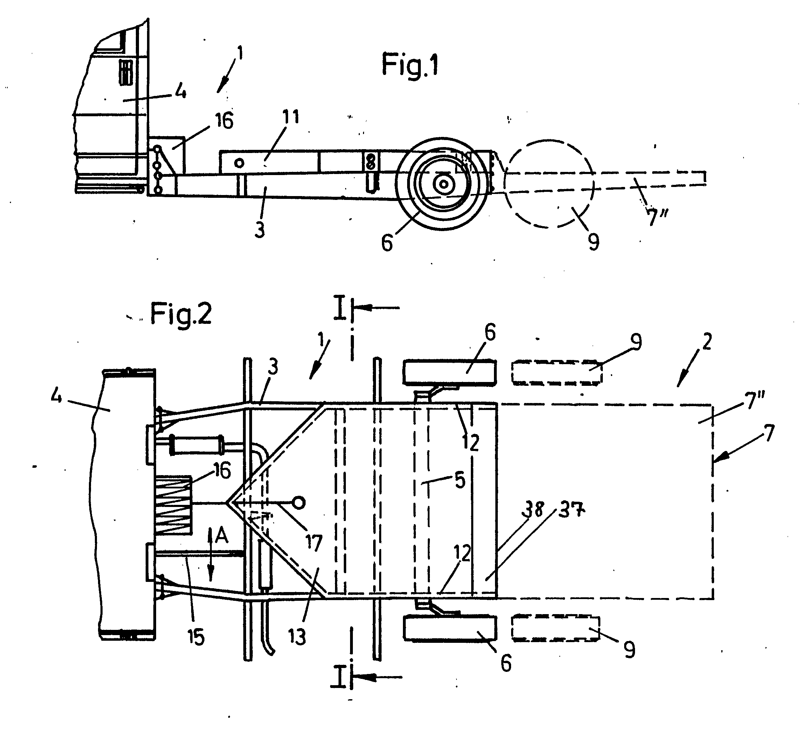

In den Figuren 1 bis 9 ist 1 das den Antriebsmotor aufweisende Basisfahrzeug des erfindungsgemäßen Straßenfahrzeugs, an welchen (Basisfahrzeug) das als Wohnanhänger ausgebildete Fahrzeugteil 2 starr ankuppelbar ist, so daß bei miteinander verbundenem Basisfahrzeug 1 und Fahrzeugteil 2 ein Straßenfahrzeug in Form eines Wohnmobils bzw. Motorkaravans erhalten wird.

Das Basisfahrzeug 1 besteht im wesentlichen aus einem Fahrzeugrahmen 3, an welchem - neben dem Führerhaus 4 und der am Heck des Fahrzeugteils 1 vorgesehenen Achse 5 mit den beiden gefederten hinteren Rädern 6 - an der in den Figuren nicht dargestellten Vorderseite des Basisfahrzeugs 1 der Antriebsmotor sowie die vordere Achse mit den beiden lenkbaren und durch den Antriebsmotor angetriebenen Vorderrädern vorgesehen sind.

Das Fahrzeugteil 2 besteht im wesentlichen aus einem Fahrzeugrahmen 7, der bei der dargestellten Ausführungsform von den beiden Rahmenteilen 7' und 7" gebildet ist, die in vertikaler Richtung derart gegeneinander versetzt sind, daß der Fahrzeugrahmen 7 am Übergangsbereich zwischen den Rahmenteilen 7' und 7" stufenförmig ausgebildet ist. Am Fahrzeugrahmen 7 bzw. am dortigen Rahmenteil 7" ist eine Achse 8 mit zwei gefederten Rädern 9 vorgesehen, so daß insoweit das Fahrzeugteil 2 einem einachsigen Anhänger entspricht. Auf dem Fahrzeugrahmen 7 befindet sich der als Wohnwagen ausgebildete Aufbau 10.

Zum Ankuppeln des Fahrzeugteiles 2 an das Basisfahrzeug 1 ist das an die Vorderseite des Fahrzeugteiles 2 reichende und an seinem vorderen Ende 7''' spitz zulaufend ausgebildete Rahmenteil 7' in einen auf dem Fahrzeugrahmen 3 befestigten Hilfsrahmen 11 derart einführbar, daß das Rahmenteil 7' an seinem vorderen Ende 7''' sowie insbes. auch an seinen in Längsrichtung des Fahrzeugteiles 2 verlaufenden Längsseiten von dem Hilfsrahmen 11 formschlüssig umfaßt wird. Der Hilfsrahmen 11 besteht hierfür im wesentlichen aus zwei im Abstand voneinander und parallel zueinander angeordneten U-Schienen 12, die mit ihren offenen Längsseiten einander zugewandt unmittelbar auf dem Fahrzeugrahmen 3 befestigt sind, und zwar derart, daß diese U-Schienen 12 mit ihrer Längserstreckung jeweils in Längsrichtung des Basisfahrzeugs 1 liegen. An ihrem dem Führerhaus 4 zugewendeten Ende sind die beiden U-Schienen 12 durch ein im Querschnitt ebenfalls U-förmiges und entsprechend dem Rahmenteil 7' spitz zulaufendes Joch 13 miteinander verbunden.

An dem dem Führerhaus 4 entferntliegenden offenen Ende des Hilfsrahmens 11 sind die beiden U-Schienen 12 an ihren unteren Schenkeln 12' durch einen Steg 37 miteinander verbunden, der an seiner Oberseite eine im wesentlichen horizontale und mit der Oberseite der Schenkel 12' niveaugleiche Auflagefläche 38 für die Unterseite des Rahmenteils 7' bildet. Anstelle des Steges 37 kann der Hilfsrahmen 11 auch einen Boden aufweisen, der zumindest an der offenen Seite des Hilfsrahmens 11 eine niveaugleich mit der Oberseite der Schenkel 12' liegende, die Anlagefläche 38 bildende Fläche aufweist.

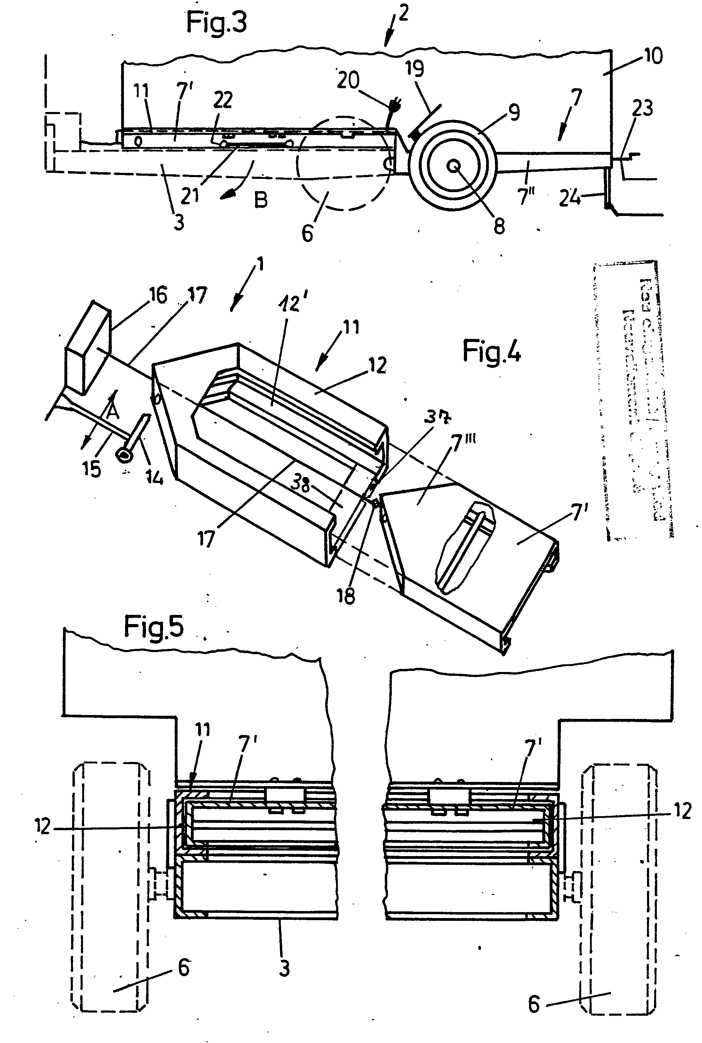

Bei an das Basisfahrzeug 1 angekuppeltem Fahrzeugteil 2 ist das Rahmenteil 7' von den U-Schienen 12 und dem Joch 13 formschlüssig umfaßt und reicht mit seinem spitz zulaufenden Ende 7''' in das Joch 13 hinein und ist dort mit Hilfe eines Sicherungsbolzens 14 festlegbar, der zum Ankuppeln bzw. Abkuppeln des Fahrzeugteiles 2 über ein Gestänge 15 vom Führerhaus 4 aus betätigbar ist, wie dies in der Fig. 4 mit dem dortigen Doppelpfeil A angedeutet ist. Mit Hilfe des Sicherungsbolzens 14 und des Hilfsrahmens 11 kann somit das Fahrzeugteil 2 bzw. dessen Rahmen 7 starr mit dem Basisfahrzeug 1 bzw. dessen Rahmen 3 verbunden werden, so daß das Basisfahrzeug 1 und das Fahrzeugteil 2 ein einziges, starres System bzw. Straßenfahrzeug bilden.

Bei am Basisfahrzeug 1 angekoppeltem Fahrzeugteil 2 greift der Sicherungsbolzen 14 durch Öffnungen im Hilfsrahmen 11 und im Rahmenteil 7', die jeweils von den Öffnungen hülsenartiger Elemente gebildet sind, um eine möglichst große Anlagefläche für den Sicherungsbolzen 14 zu erhalten und um ein Ausschlagen dieser Öffnungen zu vermeiden. Ferner bildet bei angekoppeltem Fahrzeugteil 2 das Rahmenteil 7" die Fortsetzung des Fahrzeugrahmens 3 nach hinten und das von dem Hilfsrahmen 11 aufgenommene Rahmenteil 7' liegt entsprechend der Anordnung des Hilfsrahmens 11 über dem Fahrzeugrahmen 3.

Um das Ankuppeln des Fahrzeugteiles 2 an das Basisfahrzeug 1 bzw. das Einführen des Rahmenteiles 7' in den Hilfsrahmen 11 zu erleichtern, sind die beiden, den Hilfsrahmen 11 bildenden U-Schienen an ihren, dem Joch 13 entfernt liegenden Enden jeweils leicht aufgebogen, und zwar derart, daß die beiden U-Schienen 12 dort einen etwas größeren Abstand voneinander in horizontaler Richtung sowie quer zur Längsrichtung des Basisfahrzeuges 1 aufweisen sowie an diesen Enden auch die vertikale Breite der U-Schienen 12 etwas größer ist. Hierdurch ergibt sich für den Hilfsrahmen 11 an der dem Joch 13 abgewendeten offenen Seite eine sowohl in horizontaler, als auch in vertikaler Richtung etwas verbreiterte Öffnung, so daß beispielsweise auch bei unebenem Gelände ein bequemes Einführen des Rahmenteiles 7' in den Hilfsrahmen 11 möglich ist.

Zum Ankuppeln des Fahrzeugteiles 2 an den Basisfahrzeug 1 ist an dem Fahrzeugrahmen des Basisfahrzeuges 1 hinter dem Führerhaus 4 eine manuell oder durch einen Motor betätigbare Seilwinde 16 vorgesehen, deren Zugseil 17 durch eine Öffnung im Joch 13 hindurchgeführt ist an einem an dem spitz zulaufenden Ende 7''' des Rahmenteiles 7' vorgesehenen Seilzughaken 18 befestigt werden kann.

Zum Ankuppeln des Fahrzeugteiles 2 an das Basisfahrzeug 1 werden das Basisfahrzeug 1 und das Fahrzeugteile 2 so positioniert, daß das Fahrzeugteil 2 mit seinem Rahmenteil 7' der Rückseite des Basisfahrzeuges 1 zugewendet ist. Anschließend wird das Zugseil 17 mit seinem Ende an dem Haken 18 befestigt, so daß dann bei gebremstem Basisfahrzeug 1 mit Hilfe der Seilwinde 16 das Fahrzeugteil 2 an das Basisfahrzeug 1 herangezogen und das Rahmenteil 7' in den Hilfsrahmen 11 hineinbewegt werden kann. Befindet sich das Rahmenteil 7' vollständig im Hilfsrahmen 11, so wird das Fahrzeugteil 2 mit Hilfe des Bolzens 14 am Basisfahrzeug 1 endgültig gesichert. Bei am Basisfahrzeug 1 angekuppelten Fahrzeugteil 2 befindet sich die Achse 8 unmittelbar neben der Achse 5 des Basis-fahrzeugs 1, d.h. der Abstand zwischen den Drehachsen der Räder 6 und 9 (Radabstand) is maximal 90 cm oder kleiner und damit auf jeden Fall wesentlich kleiner als der Abstand zwischen der Vorder-und Hinterachse bzw. zwischen den Vorder-und Hinterrädern des Basisfahrzeugs 1, so daß die Räder 6 und 9 als nicht gelenkte Räder ausgebildet werden können.

Durch die starre Ankupplung des Fahrzeugteiles 2 am Basisfahrzeug 1 sowie durch den geringen Radabstand zwischen den Rädern 6 und 9 ist für das Fahrzeugteil 2 bzw. dessen Räder 9 auch keine Betriebsbremse erforderlich, d.h. am Fahrzeugteil 2 ist zum Abstellen dieses Fahrzeugteiles lediglich eine auf die Räder 9 einwirkende Hand- bzw. Parkbremse 19 vorgesehen, so daß nach dem mechanischen Ankuppeln des Fahrzeugteiles 2 an das Basisfahrzeug 1 auch nur eine elektrische Verbindung mit Hilfe eines Mehrfachsteckers 20 hergestellt werden muß, und zwar für die am Fahrzeugteil 2 vorgesehenen Leuchten (Rückleuchten, Bremsleuchten, Kennzeichenbeleuchtung, Blinkleuchten usw.).

Zum Abkuppeln des Fahrzeugteiles 2 vom Basisfahrzeug 1 wird das Fahrzeugteil 2 mit Hilfe der Hand- oder Parkbremse 19 festgelegt, so daß dann - nach dem Auskuppeln des Sicherungsstiftes 14 - durch Vorwärtsfahren des Basisfahrzeugs 1 das Rahmenteil 7' zunehmend aus dem Hilfsrahmen 11 herausgleitet. Bevor das Rahmenteil 7' aus dem Hilfsrahmen 11 endgültig freikommt, schwenken zwei an dem Rahmenteil 7' zwischen dem Ende 7''' und dem Rahmenteil 7'' vorgesehene Stützen 21 aus einer Ruhestellung in eine Arbeitsstellung nach unten (Pfeil B der Fig. 3), die dan zusammen mit den Rädern 9 für einen sicheren Stand des Fahrzeugteiles 2 sorgen, wenn dieser endgültig vom Basisfahrzeug 1 abgekuppelt ist. Ein sicherer Stand des Fahrzeugteiles 2 durch die Räder 9 und die Stützen 21 ist auch deswegen gewährleistet, weil die Achse 8 am Fahrzeugrahmen 7 soweit nach hinten versetzt vorgesehen ist, daß sich der Masseschwerpunkt des Fahrzeugteiles 2 zwischen dem Anlenk-bzw. Befestigungspunkt 22 der Stützen 21 und der Achse 8 befindet.

Nach dem Abkuppeln des Fahrzeugteiles 2 vom Basisfahrzeug 1, wird das Fahrzeugteil 2 an seiner Rückseite auch noch durch wenigstens eine dort vorgesehene, mit Hilfe einer Kurbel 23 ausfahrbare Stütze 24 gesichert.

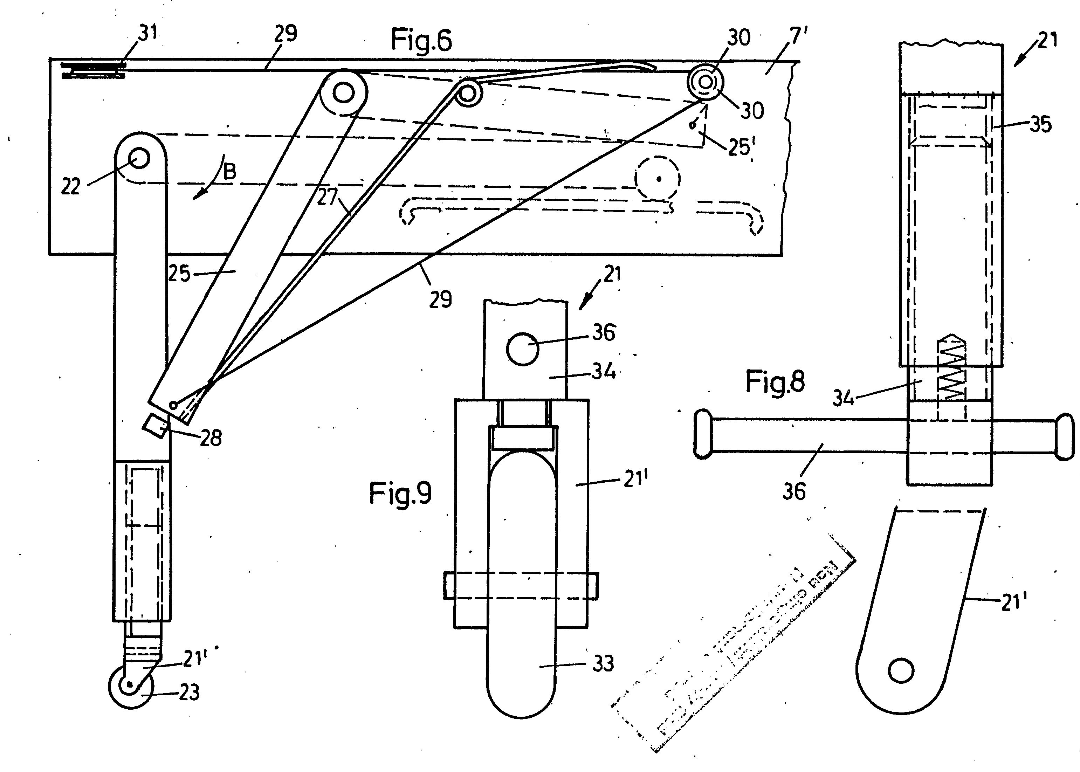

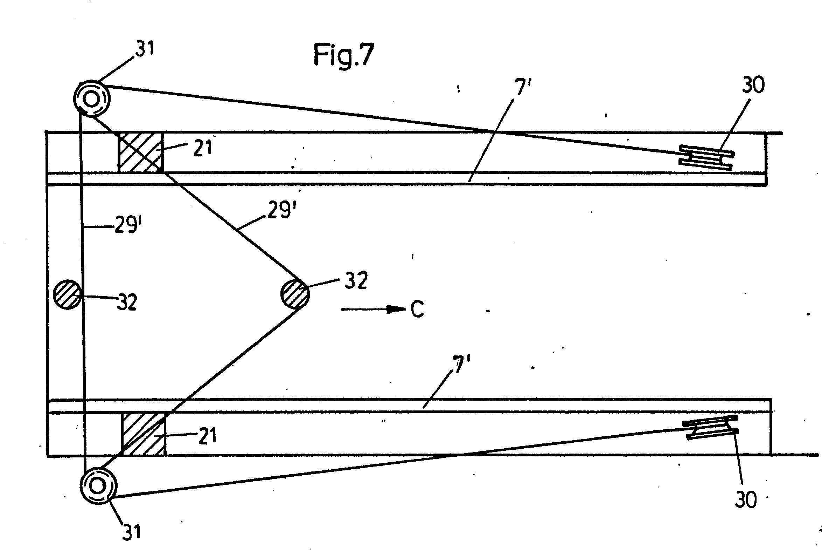

Die beiden Stützen 21 sind jeweils an einem Ende mit Hilfe eines den jeweiligen Anlenkpunkt 22 bildenden, mit seiner Achse in horizontaler Richtung sowie senkrecht zur Längsrichtung des Fahrzeugteiles 2 verlaufenden Gelenkbolzens 22' am Rahmenteil 7' derart angelenkt, daß diese Stützen 21 beim Ankuppeln des Fahrzeugteiles 2 an das Basisfahrzeug 1 gegen eine Fläche am Rahmen 3 bzw. am Hilfsrahmen 11 zur Anlage kommen und beim weiteren Einführen des Rahmenteiles 7' in den Hilfsrahmen 11 zunehmend entgegen dem Pfeil B nach oben geschwenkt werden. Durch diese Fläche am Rahmen 3 bzw. Hilfsrahmen 11 werden die Stützen dann auch bei am Basisfahrzeug 1 angekuppeltem Fahrzeugteil 2 in ihrer nach oben geschwenkten, im wesentlichen horizontalen und in Längsrichtung des Fahrzeuges verlaufenden Ruhestellung gehalten sind. Beim Abkuppeln des Fahrzeugteiles 2 kommen die Stützen 21 von der genannten Fläche zunehmend frei und schwenken un den jeweiligen Anlenkpunkt 22 aufgrund ihrer Eigengewichtes aus der horizontalen Ruhelage in die in der Fig. 6 dargestellte vertikale Arbeitslage, wobei zur Unterstützung dieser Schwenkbewegung (in Richtung des Pfeiles B) auch zusätzliche Federmittel vorgesehen sein können.

Um die Stützen 21 in ihrer vertikalen Arbeitslage zu sichern, d.h. bei abgestelltem Fahrzeugteil 2 einem Einknicken der Stützen 21 zu vermeiden, ist für jede Stütze 21 am Rahmenteil 7' jeweils eine von einem Hebel 25 gebildete Sicherung vorgesehen. Jeder Hebel 25 ist an seinem einen Ende mittels eines Gelenkbolzens 26 um eine parallel zu dem Anlenkpunkt 22 verlaufende horizontale Achse am Rahmenteil 7' schwenkbar befestigt und durch eine zwischen diesem Hebel und dem Rahmenteil 7' wirkende Feder 27 so vorgespannt, daß jeder Hebel 25 durch diese Feder beim Bewegen der zugehörigen Stütze 21 aus der Ruhestellung in die Arbeitsstelung um den Gelenkbolzen 26 derart geschwenkt wird, daß der Hebel 25 mit seinem den Gelenkbolzen 26 entfernt liegenden freien Ende gegen eine Anlagefläche 28 der zugehörigen Stütze 21 zur Anlage kommt und dadurch ein Zurückschwenken dieser Stütze 21 aus der Arbeitsstellung in die Ruhestellung (entgegen dem Pfeil B) verhindert.

Um beim Ankuppeln des Fahrzeugteiles 2 an das Basisfahrzeug 1 die von den Hebeln 25 gebildeten Sicherungen zu lösen und damit ein Schwenken der Stützen 21 entgegen dem Pfeil B aus der Arbeitsstellung in die Ruhestellung zu ermöglichen, ist am Fahrzeugrahmen 7 eine Seilzuganordnung vorgesehen, die beim Ankuppeln des Fahrzeugteiles 2 an den Basisfahrzeug 1, d.h. beim Einführen des Rahmenteiles 7' in den Hilfsrahmen 11 die beiden Hebel 25 gegen der Wirkung der Federn 27 um die Gelenkbolzen 26 in deren horizontale Ruhestellung schwenkt, die in der Fig. 6 mit 25' angegeben ist, wodurch die Hebel 25 außer Eingriff mit den Anlageflächen 28 an den Stützen 21 kommen und diese Stützen für ein Schwenken um den jeweiligen Anlenkpunkt 22 freigeben. Die Seilzuganordnung besteht aus einem Seil 29, welches beidendig mit jeweils einem Hebel 25 verbunden ist, und zwar mit dem dem Gelenkbolzen 26 entfernt liegenden Ende des betreffenden Hebels 25. Das Seil 29 ist ausgehend von jedem Hebel 25 jeweils über eine erste, am Fahrzeugrahmen 7 frei drehbar gelagerte Umlenkrolle 30 geführt, die bezogen auf die Gelenkbolzen 22' und 26 weiter hinten am Fahrzeugrahmen 7 vorgesehen ist, und zwar etwa dort, wo bei in Ruhestellung 25' befindlichen Hebeln 25 sich die freien Enden dieser Hebel befinden. Die beiden Umlenkrollen 30 sind jeweils um eine im wesentlichen horizontale und quer zur Längsrichtung des Fahrzeugteiles 2 verlaufende Achse drehbar. Auf jede Umlenkrolle 30 folgend verläuft das Seil 30 in Richtung auf das vordere Ende 7''' des Fahrzeugrahmens 7 und ist dort über jeweils eine zweite Umlenkrolle 31 geführt, wobei diese zweiten Umlenkrollen 31 ebenfalls frei drehbar am Fahrzeugrahmen 7 vorgesehen sind, und zwar jeweils um eine vertikale, senkrecht zur Längserstreckung des Fahrzeugteils 2 verlaufende Achse.

Bei vom Basisfahrzeug 1 abgekuppeltem Fahrzeugteil 2 erstreckt das Seil 29 mit einer freien, geraden Länge 29' in horizontaler Richtung und senkrecht zur Längsrichtung des Fahrzeugteiles 2 zwischen den beiden Umlenkrollen 31. Wird nun das Fahrzeugteil 2 an das Basisfahrzeug 1 angekoppelt, d.h. das Rahmenteil 7' in den Hilfsrahmen 11 eingeführt, so kommt ein am Fahrzeugrahmen 3 vorgesehener Zapfen 32 gegen die Länge 29' zur Anlage, wodurch mit dem weiteren Einführen des Rahmenteiles 7' in den Hilfsrahmen 11 die sich zwischen den Umlenkrollen 31 erstreckende Länge 29' von dem Zapfen zunehmend zur Rückseite des Fahrzeugteiles 2 hin mitgeführt wird, wie dies mit dem Pfeil C in der Fig. 7 angedeutet ist. Hierdurch werden die Hebel 25 gegen die Wirkung der Federn 27 aus ihrer Arbeitsstellung (unter Freigabe der Stützen 21) in die Ruhestellung 25' geschwenkt.

Die beiden Stützen 21 weisen an ihrem dem Anlenkpunkt 22 entfernt liegenden Ende jeweils eine Rolle bzw. ein Rad 33 auf, wobei das dieses Rad 33 tragende und bei der dargestell ten Ausführungsform gabelartig ausgebildete Ende 21' jeder Stütze 21 auch um die Längsachse der Stütze drehbar ist. Weiterhin ist jede Stütze 21 im Bereich ihres Endes 21' längenverstellbar ausgebildet, und zwar dadurch, daß an dem gabelartigen Ende 21' ein Gewindebolzen 34 vorgesehen ist, der in eine mit einem Innengewinde versehene Hülse 35 an der betreffenden Stütze 21 eingreift. Mit Hilfe einer Stange 36 kann zur Verlängerung bzw. zur Verkürzung der betreffenden Stütze 21 das Gewindestück 34 in die Hülse 35 hinein- bzw. herausgedreht werden.

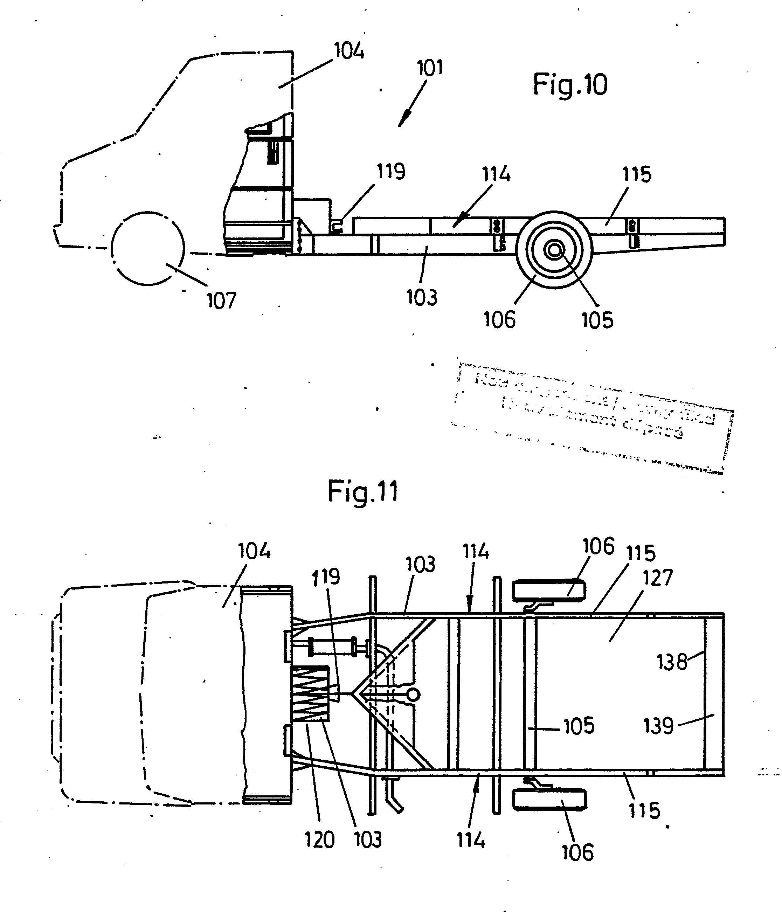

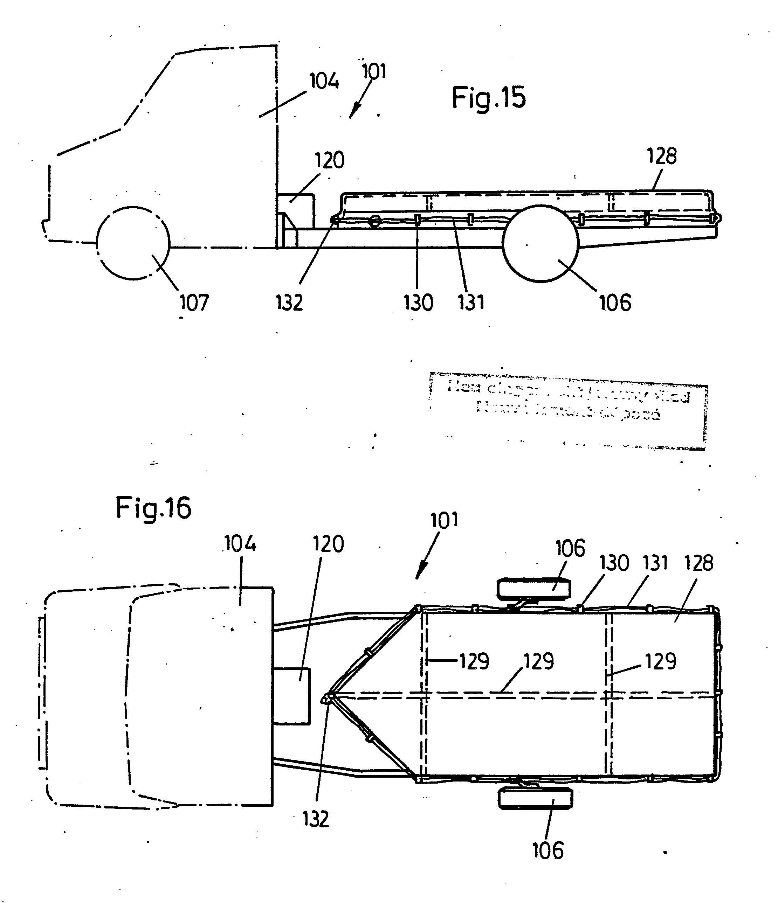

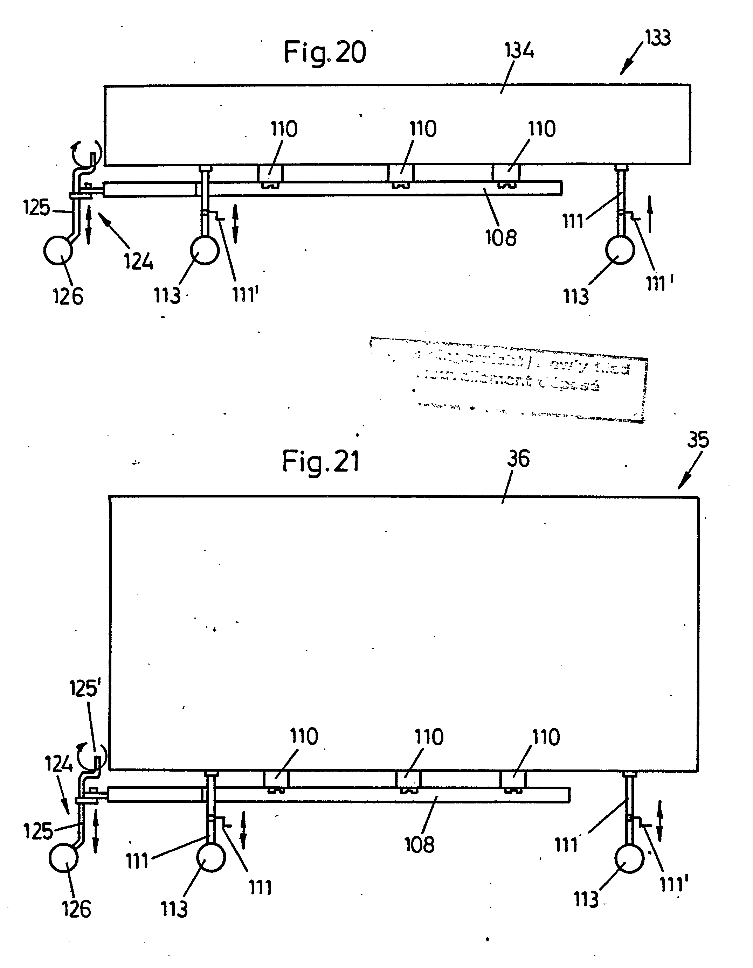

In den Figuren 10 bis 21 ist 101 Basisfahrzeug, mit welchem das als Wohnwagen-Aufbau ausgebildete Fahrzeugteil 102 starr verbunden werden kann.

Das Basisfahrzeug 101 besteht im wesentlichen aus einem Fahrzeugrahmen 103, an welchem (neben dem Führerhaus 104 und der im Bereich des Hecks des Basisfahrzeugs 101 vorgesehenen Achse 105 mit den beiden hinteren Rädern 106) an der Vorderseite des Basisfahrzeugs 101 der Antriebsmotor sowie die vordere Achse mit den beiden lenkbaren und durch den Antriebsmotor angetriebenen Vorderrädern 107 vorgesehen sind.

Das Fahrzeugteil 102 besteht im wesentlichen aus einem Fahrzeugrahmen 108, auf dem der eigentliche Wohnwagen-Aufbau 109 über Rahmenelemente 110 mit gewissem Abstand befestigt ist. Der Rahmen 108 besitzt eine solche Länge, daß er sich vom vorderen Ende 102' des Fahrzeugteils 102 in Richtung zum hinteren Ende dieses Fahrzeugteils über die größere Länge diese Fahrzeugteils erstreckt und in einem Abstand von dem hinteren Ende 102'' endet, der kleiner ist als Länge des Rahmens 108. Weiterhin besitzt der Rahmen 108 eine Breite, die etwas kleiner ist als die Breite des Wohnwagen-Aufbaus 109, so daß letzterer beidseitig geringfügig über den Rahmen 108 wegsteht.

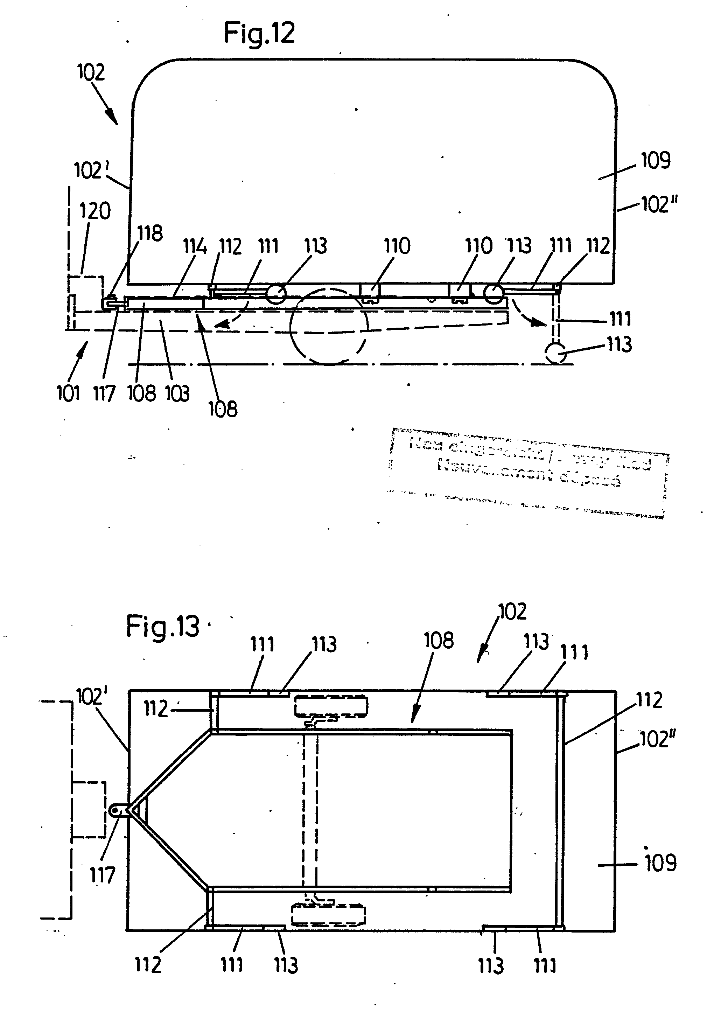

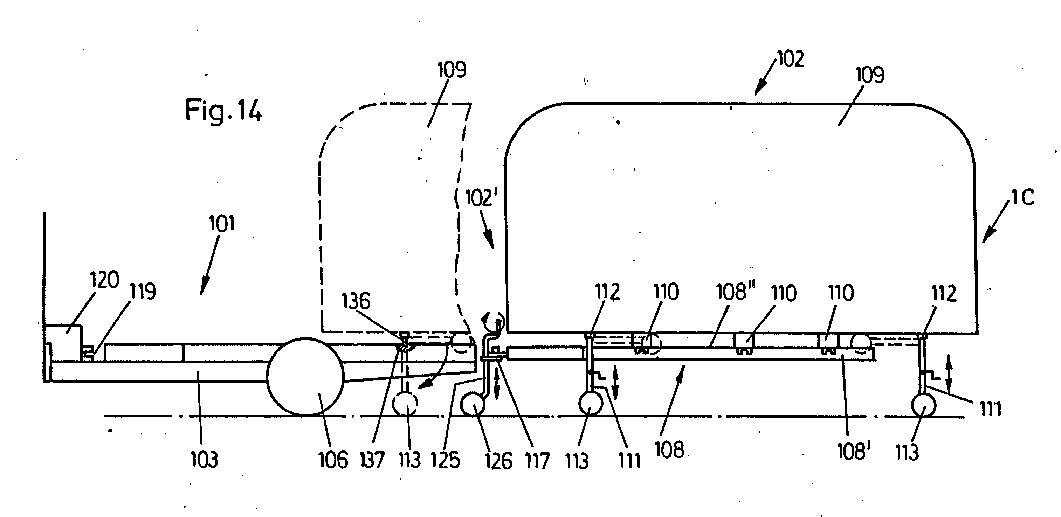

Im Bereich des vorderen Endes 102' sowie im Bereich des hinteren Endes 102" sind an der Unterseite des Wohnwagen-Aufbaus bzw. an einem diese Unterseite bildenden Rahmen jeweils zwei in ihrer Höhe verstellbare (Doppelpfeil B) sowie klappbare Stützen 111 vorgesehen, die an ihrem oberen Ende jeweils um eine horizontale, quer zur Längsrichtung des Fahrzeugteils 102 und damit senkrecht zur Zeichenebene der Figuren 12 und 14 verlaufende Achse 112 schwenkbar an der Unterseite des Wohnwagen-Aufbaus 109 bzw. an einem dort vorgesehenen Rahmen gehalten sind und an ihrem anderen Ende jeweils ein um eine Achse parallel zur Achse 112 drehbar galagertes, allerdings nicht lenkbares Rad 113 aufweisen. Zumindest die an den hinteren Stützen vorgesehenen Räder 113 sind mit einer nicht näher dargestellten Bremseinrichtung versehen. Um die Achse 112 können die die Räder 113 aufweisenden Stützen 111 aus einer Nichtgebrauchsstellung, in der diese Stützen 111 mit ihrer Längserstreckung im wesentlichen in horizontaler Richtung bzw. parallel zur Unterseite des Wohnwagen-Aufbaus 109 liegend nach oben geschwenkt sind, in eine Gebrauchsstellung geschwenkt werden, in der die Stützen 111 im wesentlichen in vertikaler Richtung von der Unterseite des Wohnwagen-Aufbaus 109 nach unten wegstehen. In der Fig. 12 sind die Nichtgebrauchsstellung der Stützen 111 mit ausge zogenen Linien und die Gebrauchstellung dieser Stützen mit unterbrochenen Linien und in der Fig. 14 in umgekehrter Weise die Nichtgebrauchsstellung der Stützen 111 mit unterbrochenen Linien und die Gebrauchsstellung dieser Stützen 111 mit durchgehenden Linien dargestellt.

Bei der gezeigten Ausführungsform ist der Rahmen 108 entsprechend der Fig. 14 über seine größere Länge als C-Profil ausgebildet, und zwar mit zwei sich in Längsrichtung des Rahmens 108 erstreckenden parallelen Schenkeln 108' und einem diese Schenkel miteinander verbindenden Jochabschnitt 108", der die im wesentlichen horizontale Oberseite des Rahmens 108 bildet und von dem sich die Schenkel 108' nach unten weg erstrecken.

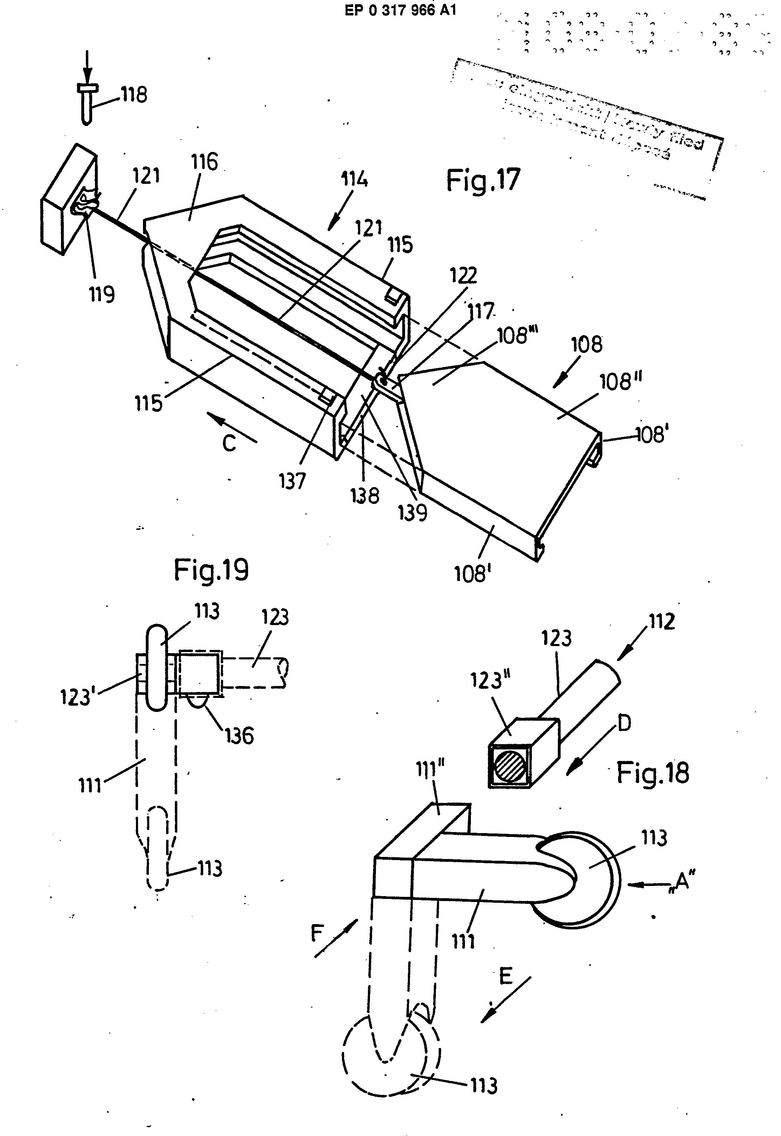

Zum Befestigen des Fahrzeugteils 102 am Basisfahrzeug 101 ist der Rahmen 108 mit seinem bis an die Vorderseite 102' des Fahrzeugteils 102 reichenden, spitz zulaufenden Ende 108''' voraus in einen auf dem Fahrzeugrahmen 103 befestigten Hilfs rahmen 114 entsprechend dem Pfeil C der Fig. 17 derart einführbar, daß der Rahmen 108 an seinem vorderen Ende 108''', aber auch im Bereich seiner Schenkel 108' von dem Hilfsrahmen 114 formschlüssig umfaßt wird. Der Hilfsrahmen 114 besteht hierfür aus zwei im Abstand voneinander und parallel zueinander angeordneten U-Schienen 115, die mit ihren offenen Längsseiten einander zugewandt auf dem Fahrzeugrahmen 103 befestigt sind, und zwar derart, daß diese U-Schienen 115 mit ihrer Längserstreckung jeweils in Längsrichtung des Basisfahrzeugs 101 liegen. An ihrem dem Führerhaus 104 benachbarten Ende sind die beiden U-Schienen 115 durch ein im Querschnitt ebenfalls U-förmiges, aber entsprechend dem Ende 108''' des Rahmens 108 spitz zulaufendes Joch 116 miteinander verbunden. An dem offenen Ende weist der Hilfsrahmen 114 den dem Steg 37 entsprechenden Steg 138 auf, der an seiner Oberseite die Anlagefläche 139 bildet.

Bei am Basisfahrzeug 101 befestigtem Fahrzeugteil 102 ist der Rahmen 108 von den U-Schienen 115 und dem Joch 116 formschlüssig umfaßt und reicht mit seinem spitz zulaufenden Ende 108''' in das Joch hinein, so daß das Fahrzeugteil 102 und das Basisfahrzeug 101 ein starres System bilden. Um das Fahrzeugteil 102 am Basisfahrzeug 101 zu sichern, ist am spitz zulaufenden Ende 108''' des Rahmens 108 ein über dieses Ende vorstehende zuggabelartige Hülse 117 vorgesehen, die bei am Basisfahrzeug 101 befestigtem Fahrzeugteil 102 über die dem Führerhaus 104 zugewendete Seite des Jochabschnittes 116 vorsteht und mit Hilfe eines Sicherungsbolzens 118 in einer am Basisfahrzeug 104 bzw. am dortigen Rahmen 103 vorgesehenen Zugöse 118 gesichert werden kann, wie sie als Anhängerkupplung bei Fahrzeugen bekannt ist.

Am Rahmen 103 des Basisfahrzeugs ist hinter dem Führerhaus 104 weiterhin eine manuell oder durch einen Motor betätigbare Seilwinde 120 vorgesehen, deren Zugseil 121 durch eine Öffnung in der Zugöse 119 hindurchreicht und ebenso wie die Öse 117 durch eine im Jochabschnitt 116 vorgesehene Öffnung hin durchgeführt werden kann. Am freien Ende des Zugseiles 121 ist ein Zughaken 122 vorgesehen, der an der Öse 117 befestigt werden kann.

Wie in den Fig. 18 und 19 schematisch dargestellt ist, sind an der Schwenkachse 112 der Stützen 111 jeweils Mittel vorgesehen, die ein Einrasten dieser Stützen in ihrer Gebrauchsstellung bzw. Nichtgebrauchsstellung bewirken. Bei der in den Fig. 18 und 10 dargestellten Ausführungsform sind für die schwenkbare Halterung der Stützen 111 jeweils in der Richtung der Schwenkachse 112 verlaufende und am Wohnwagen-Aufbau 119 befestigte Gelenkbolzen 123 vorgesehen, von denen jeder Gelenkbolzen 123 mit einem Ende 123' in ein Schwenklager einer Stütze 111 eingreift. Mit Abstand von dem Ende 123' ist auf jedem Schwenkbolzen ein Abschnitt 123" vorgesehen, der einen quadratischen Außenquerschnitt aufweist und von einer an den Querschnitt des Abschnittes 123" angepaßten Öffnung an einem Abschnitt 111" der Stütze 111 aufgenommen ist. Durch Abziehen des Abschnittes 111″ von dem Abschnitt 123″, d.h. durch Bewegen der Stütze 111 in Richtung der Schwenkachse 112 bzw. in Richtung der Achse des Gelenkbolzens 123 (Pfeil D der Fig. 18) wird der Abschnitt 111″ außer Eingriff mit dem Abschnitt 123″ gebracht, so daß die betreffende, nun ausgerastete, aber noch am Ende 123′ des Gelenkbolzens 123 schwenkbar gehaltene Stütze 111 nun um 90°, d.h. beispielsweise entsprechend dem Pfeil E der Fig. 18 aus der Nichtgebrauchsstellung in die Gebrauchsstellung geschwenkt werden kann. Nach dem Schwenken wird die Stütze 111 mit ihrem Abschnitt 111″ wieder auf den Abschnitt 123″ aufgeschoben (Pfeil F der Fig. 18), so daß die betreffende Stütze 111 wieder arretiert ist. Durch nicht dargestellte Federmittel ist jede Stütze 111 in Richtung des Pfeiles F in bezug auf den zugehörigen Gelenkbolzen 123 vorgespannt, so daß beim Schwenken der Stütze 111 diese automatisch bzw. zwangsweise arretiert und in der arretierten Stellung gehalten wird.

Zumindest die im Bereich des vorderen Endes 102′ des Fahrzeugteils 102 vorgesehenen Stützen 111 sind dort so angeordnet, daß sie einschließlich ihrer Räder 113 in der Nicht gebrauchsstellung über dem Rahmen 108 und in der Gebrauchsstellung mit einer Teillänge der Außenfläche des jeweiligen Schenkels 108′ benachbart liegen.

Das vom Basisfahrzeug 101 abgekuppelte bzw. getrennte Fahrzeugteil 102 ist auf den in die Gebrauchsstellung geschwenkten Stützen 111 abgestellt. Zum Verbinden des Fahrzeugteils 102 mit dem Basisfahrzeug 101 wird letzteres so vor dem vorderen Ende 102′ des Fahrzeugteils 102 positioniert, daß das zum Heck des Basisfahrzeugs 101 hin offene Ende des maulartigen Hilfsrahmens 114 dem spitz zulaufenden vorderen Ende 108‴ des Rahmens 108 zugewendet ist. Das mit einer bestimmten Länge von der Seilwinde 120 bzw. der dortigen Trommel abgezogene und durch die Öffnung des Jochabschnitts 116 hindurchgeführte Zugseil wird mit dem Zughaken 122 an der Öse 117 befestigt. Die Stützen 111 werden durch Drehen der an den Stützen vorgesehenen Handkurbeln 111′ auf eine passende Höhe eingestellt, so daß dann durch Betätigen der Seilwinde 120 das Fahrzeugteil 102 mit seinem Rahmen 108 in den Hilfsrahmen 114 hereingezogen werden kann, wobei das spitz zulaufende Ende 108‴ das Einführen des Rahmens 108 in den Hilfsrahmen 114 erleichtert. Sobald das Ende 108‴ des Rahmens 108 in den Hilfsrahmen 114 eingeführt ist und auch die beiden Längsseiten des Rahmens 108 mit einer gewissen Länge in die Schienen 115 eingreifen, wird die Seilwinde 120 gestoppt. Die vorderen Stützen 111 werden aus ihrer Gebrauchsstellung und damit aus dem Bewegungsraum des Hilfsrahmens 114 in die Nichtgebrauchsstellung geschwenkt. Durch erneutes Einschalten der Seilwinde 120 wird dann der Rahmen 108 vollständig in den Hilfsrahmen 114 eingezogen. Nach dem Lösen des Zughakens 122 von der Öse 117 kann diese mit Hilfe des Bolzens 118 in der Zugöse 119 gesichert werden. Im Anschluß daran werden dann auch die hinteren Stützen 111 aus der Gebrauchsstellung in die Nichtgebrauchsstellung geschwenkt.

Zum Trennen bzw. Abstellen des Fahrzeugteils 102 werden zunächst die im Bereich des hinteren Endes 102″ vorgesehenen Stützen 111 aus der Nichtgebrauchsstellung in die Gebrauchsstellung geschwenkt und mit Hilfe der Handkurbeln 111′ in ihrer Länge so eingestellt, daß die gebremsten Räder 113 auf dem Boden bzw. Untergrund aufstehen. Nach dem Lösen des Bolzens 118 wird das Basisfahrzeug 101 langsam nach vorwärts gefahren, und zwar solange, bis der Hilfsrahmen 114 außerhalb des Schwenkraumes der vorderen Stützen 111 liegt, der Rahmen 108 jedoch noch im Hilfsrahmen 114 gehalten ist. Die vorderen Stützen 111 werden dann aus ihrer Nichtgebrauchsstellung in die Gebrauchsstellung geschwenkt und durch Drehen an den Handkurbeln 111′ auf die notwendige Höhe eingestellt, und zwar vorzugsweise auf eine Höhe, die eine völlige Entlastung des Basisfahrzeugs 101 von dem Gewicht des Fahrzeugteils 102 bedingt. Durch weiteres Vorfahren des Basisfahrzeugs 101 wird dieses völlig von dem Fahrzeugteil 102 getrennt, welches dann auf den Stützen 111 freistehend angeordnet ist. Wie insbesondere die Fig. 19 zeigt, ist an dem Abschnitt 111″ jeder vorderen, d.h. dem vorderen Ende 102′ benachbarten Stütze ein Sicherheitszapfen 136 vorgesehen, der bei nach oben geschwenkter bzw. in Nichtgebrauchsstellung befindlicher Stütze 111 über die Unterseite des Abschnittes 111″ wegsteht. Beim Trennen bzw. Abstellen des Fahrzeugteiles 102 kommen diese Sicherheitszapfen 136 jeweils gegen einen Gegenanschlag 137 zur Anlage, der an der Oberseite des Hilfsrahmens 114 im Bereich des hinteren, offenen Endes dieses Hilfsrahmens vorgesehen ist, so daß bei in ihrer Nichtgebrauchsstellung befindlichen vorderen Stützen 111 ein vollständiges Trennen des Basisfahrzeuges 101 bzw. des Hilfsrahmens 114 vom Fahrzeugteil 102 bzw. vom Rahmen 108 nicht möglich ist. Ein vollständiges Trennen des Fahrzeugteiles 102 vom Basisfahrzeug 101 ist vielmehr erst dann vorgenommen werden kann, wenn beide vorderen Stützen 111 in ihre Gebrauchsstellung geschwenkt worden sind und sich damit die Sicherheitszapfen 136 in einer Stellung befinden, in der sie nicht mehr über die Unterseite der Abschnitte 111″ wegstehen, so daß sich die Gegenanschläge 137 beim weiteren Vorwärtsfahren des Basisfahrzeuges 101 an den nach oben geschwenkten Sicherheitszapfen 136 vorbeibewegen können. Anstelle der Sicherheitszapfen 136 und der Gegenanschläge 137 können selbstverständlich auch andere Sicherheits-Rast-Elemente vorgesehen sein, die ein vollständiges Trennen des Rahmens 108 von dem Hilfsrahmen 114 solange verhindern, solange die vorderen Stützen 111 nicht in ihre Gebrauchsstellung geschwenkt sind.

Um das vom Basisfahrzeug 101 getrennte Fahrzeugteil 102 in eine gewünschte Position rangieren bzw. bewegen zu können, wird in die Öse 117 ein schwenk-bzw. lenkbares Stützrad 124 eingesetzt, welches aus der höhenverstellbaren Stütze 125 und dem Rad 126 besteht. Die Stütze 125 wird durch Drehen an der Handkurbel 125' in ihrer Länge so eingestellt, daß die Räder 113 der vorderen Stützen 111 vom Boden bzw. Untergrund abheben. Das Fahrzeugteil 102 bildet dann ein dreirädriges, lenkbares Fahrzeug, welches in die gewünschte Position geschoben werden kann. Dort wird das Stützrad 124 nach entsprechender Verkürzung der Stütze 125 wieder abgenommen. Das dann erneut allein auf den Stützen 111 aufstehende Fahrzeugteil 102 kann durch Verkürzung der Längen der Stützen 111 soweit abgesenkt werden, daß ein bequemer Ein- und Ausstieg in den vom Fahrzeugteil 102 gebildeten Wohnwagen-Aufbau möglich ist.

Das Basisfahrzeug 101 ohne das Fahrzeugteil 102 kann am Aufenthalts- bzw. Urlaubsort für Fahrten benutzt werden. Zumindest im Bereich des Hilfsrahmens 114 ist am Rahmen 103 des Basisfahrzeugs eine Ladefläche 127 gebildet, die durch eine Plane 128 abdeckbar ist. Die vorzugsweise noch durch am Hilfsrahmen 114 einsetzbare Streben 129 unterstützte Plane 128 ist mit Öffnungen an Ösen 130 des Hilfsrahmens 114 gehalten und dort durch ein Seil 131 mit Schloß 132 gesichert.

Anstelle des Fahrzeugteils 102 kann das Basisfahrzeug 101 auch zusammen mit einem Fahrzeugteil 133 verwendet werden, welches anstelle des Wohnwagen-Aufbaus 109 eine Pritsche oder offene Ladefläche 134 aufweist. Weiterhin kann das Basisfahrzeug 101 beispielsweise auch zusammen mit einem Fahrzeugteil 135 verwendet werden, welches auf dem Rahmen 108 anstelle des Wohnwagen-Aufbaus 109 einen Container aufweist, der beispielsweise eine für den Eisenbahntransport oder für Luftfracht angepaßte Größe besitzt. Selbstverständlich sind auch weitere Aufbauvarianten bzw. Varianten für das mit dem Basisfahrzeug 101 zu verbindende Fahrzeugteil denkbar, wie beispielsweise Verkaufswägen, Bootsträger usw.. Allen diesen Ausführungen ist gemeinsam die Kombination des in den Hilfsrahmen 114 einführbaren Rahmens 108 und der in ihrer Höhe verstellbaren Stützen 111.

Allen beschriebenen Ausführungen ist weiterhin gemeinsam, daß der Rahmen 108 mit Abstand unter der ebenen Unterseite des Aufbaus des Fahrzeugteils 102, 133 bzw. 135 befestigt ist. Durch die C-profilförmige Ausbildung des Rahmens 108 weist dieser eine hohe Stabilität auf, so daß der Rahmen 108 letztlich das eigentlich tragende Element des jeweiligen Fahrzeugteils 102, 133 bzw. 135 bilden kann. Da sich der Rahmen 108 weiterhin über den größten Teil der Länge des jeweiligen Fahrzeugteils 102, 133 bzw. 135 erstreckt, ergibt sich auch auf großer Länge eine sehr verwindungssteife Verbindung zwischen diesem Fahrzeugteil und dem Basisfahrzeug 101. Durch die beschriebene Ausbildung ist es insbesondere für das Fahrzeugteil 102 auch möglich, herkömmliche, auf dem Markt erhältliche Aufbauten als Wohnwagen-Aufbau 109 zu verwenden, wobei gleichzeitig bei allen Fahrzeugteilen 102, 133 und 135 durch die lösbare Verbindung mit dem Basisfahrzeug 101 keine Einschränkungen hinsichtlich der jeweils nutzbaren Fläche in Kauf genommen werden müssen.

Bei allen vorbeschriebenen Ausführungen ist beim Ankuppeln des Fahrzeugteils 2, 102, 133 bzw. 135 an das Basisfahrzeug 1 bzw. 101 ein besonders einfaches Ausrichten des Basisfahrzeugs und des Fahrzeugteils in der Weise möglich, daß das Basisfahrzeug und das Fahrzeugteil vor dem Ankuppeln in einer Linie hintereinander angeordnet sind. Hierzu wird zunächst in der oben bereits beschriebenen Weise mit Hilfe der Seilwinde 16 bzw. 120 das Fahrzeugteil 2, 102, 133 bzw. 135 so an das Basisfahrzeug 1 bzw. 101 heranbewegt, daß das vordere Ende 7''' bzw. 108''' in das offene Ende des Hilfsrahmens 11 bzw. 114 hineinreicht und mit seiner Unterseite auf der dortigen Auflagefläche 38 bzw. 139 aufliegt. Anschließend wird das Basisfahrzeug 1 bzw. 101 bei mit dem Fahrzeugteil 2, 102, 133 bzw. 135 verbundenem Zugseil 17 bzw. 121 um einen bestimmten Weg nach vorne gefahren, wodurch sich das mit dem Basisfahrzeug mitgezogene Fahrzeugteil so ausrichtet, daß Basisfahrzeug und Fahrzeugteil in einer Linie angeordnet sind und somit ein Ankoppeln des Fahrzeugteils am Basisfahrzeug ohne Probleme möglich ist.

## Ansprüche

1. Straßenfahrzeug bestehend aus einem Basisfahrzeug (1, 101), welches an einem ersten Rahmen (3, 103) einen Antriebsmotor sowie wenigstens zwei Achsen aufweist, von denen wenigstens eine Achse angetrieben und die vordere Achse lenkbar ist, sowie aus einem Fahrzeugteil (2, 102), welches zumindest mit einem Teil (7') eines zweiten Rahmens (7, 108) starr am ersten Rahmen (3, 103) befestigbar ist, dadurch gekennzeichnet, daß auf dem ersten Rahmen (3, 103) des Basisfahrzeuges (1, 101) ein Zurückseil des Basisfahrzeugs (1, 101)' hin offener Hilfsrahmen (11, 114) vorgesehen ist, in welchen von der Rückseite des Basisfahrzeugs (1, 101) her der zweite Rahmen (7, 108) mit einem sich im Bereich der Vorderseite des Fahrzeugteils (2, 102) verjüngenden oder spitz zulaufenden Ende (7‴, 108‴) einführbar ist und welcher bei am Basisfahrzeug (1, 101) befestigtem Fahrzeugteil (2, 102) den zweiten Rahmen (7, 108) zumindest an seinem Rahmenteil (7′) formschlüssig aufnimmt, und daß der Hilfsrahmen (11, 114) zumindest an seinem offenen Ende eine über die gesamte Breite des Hilfsrahmens sich erstreckende, im wesentlichen horizontale Auflage- bzw. Gleitfläche (38, 139) für die Unterseite des zweiten Rahmens (7, 108) bzw. für den mit dem Hilfsrahmen zusammenwirkenden Rahmenteil (7′) dieses zweiten Rahmens aufweist.

2. Straßenfahrzeug nach Anspruch 1, dadurch gekennzeichnet, daß der Hilfsrahmen (11, 114) von wenigstens zwei U-Profilen oder U-Schienen (12, 115) gebildet sind, die parallel zu und im Abstand voneinander jeweils mit ihrer Längserstreckung in Längsrichtung des Basisfahrzeugs (1, 101) auf dem ersten Rahmen (3) derart befestigt sind, daß die offene Längsseite jeder U-Schiene (12, 115) der offene Längsseite der anderen U-Schiene (12, 115) zugewendet ist, und daß die U-Schienen (12, 115) zwischen sich sowie zwischen ihren Schenkeln den zweiten Rahmen (7, 108) bzw. dessen Rahmenteil (7′) formschlüssig aufnehmen.

3. Straßenfahrzeug nach Anspruch 1 oder 2, dadurch gekennzeichnet, daß der zweite Rahmen (7, 108) bzw. der mit dem Hilfsrahmen (11, 114) zusammenwirkende Rahmenteil (7′) dieses zweiten Rahmens ein U- oder C-förmiges Querschnittsprofil aufweist oder von wenigstens zwei U-Schienen gebildet ist.

4. Straßenfahrzeug nach einem der Ansprüche 1-3, dadurch gekennzeichnet, daß das Fahrzeugteil (2, 102) einen Aufbau aufweist, der mit Abstand auf dem zweiten Rahmen (7, 108), zumindest mit Abstand auf dem mit dem Hilfsrahmen zusammenwirkenden Rahmenteil (7′) des zweiten Rahmens (7) befestigt ist.

5. Straßenfahrzeug nach einem der Ansprüche 1-4, dadurch gekennzeichnet, daß das Fahrzeugteil (2, 102, 133, 135) einen Wohnwagen-Aufbau, eine Pritsche, ein Container, ein Verkaufswagen oder Bootsträger ist bzw. aufweist.

6. Straßenfahrzeug nach einem der Ansprüche 1-5, dadurch gekennzeichnet, daß am Basisfahrzeug (1, 101) eine Seilwinde (16, 120) mit Zugseil (17, 121) und an der Vorderseite des Fahrzeugteils (2, 102) bzw. am vorderen Ende (7‴, 108‴) des zweiten Rahmens (7, 108) ein Kupplungselement (18, 117) für das Zugseil (17, 121), vorzugsweise in Form eines Seilzughakens oder einer Seilzugöse vorgesehen sind.

7. Straßenfahrzeug nach einem der Ansprüche 1-6, dadurch gekennzeichnet, daß das Fahrzeugteil (2) eine dritte, nicht lenkbare Achse (8) mit wenigstens zwei Rädern aufweist, und daß bei am Basisfahrzeug (1) angekoppeltem Fahrzeugteil die zweite sowie dritte Achse bzw. die diese Achsen bildenden Räder (6, 9) unmittelbar nebeneinander in einem Radabstand angeordnet sind, der um ein Vielfaches kleiner ist als der Abstand zwischen der ersten und zweiten Achse des Basisfahrzeugs (1), wobei der Achsabstand zwischen der zweiten und dritten Achse kleiner als 100 cm ist, wobei vorzugsweise der zweite Rahmen (7) des Fahrzeugteils (2) aus wenigstens zwei Rahmenteilen (7′, 7″) besteht, die aneinander anschließend in vertikaler Richtung derart stufenartig gegeneinander versetzt sind, daß bei an das Basisfahrzeug (1) angekuppeltem Fahrzeugteil (2) ein vorderer, von dem Hilfsrahmen (11) aufgenommener Rahmenteil (7′) des Fahrzeugteils (2) über dem ersten Rahmen (3) liegt und ein hinterer Rahmenteil (7″) des zweiten Rahmens (7) im wesentlichen die Fortsetzung des ersten Rahmens (3) bildet.

8. Straßenfahrzeug nach Anspruch 7, dadurch gekennzeichnet, daß am zweiten Rahmen (7) wenigstens eine um eine horizontale, senkrecht zur Längsrichtung des Fahrzeugteils (2) verlaufende Achse (22) schwenkbare Stütze (21) vorgesehen ist, wobei vorzugsweise am ersten Rahmen (3) eine Anlagefläche für die wenigstens eine Stütze (21) gebildet ist, gegen die diese Stütze (21) beim Ankoppeln des Fahrzeugteils (2) an das Basisfahrzeug (1) zur Anlage kommt und welche die Stütze (21) aus einer vertikalen Arbeitsstellung in eine angehobene Ruhestellung schwenkt, und/oder wobei vorzugsweise ein bevorzugt von einem Hebel (25) gebildetes Sicherungselement zur Sicherung der Stütze (21) in der Arbeitsstellung sowie bevorzugt auch Mittel (29, 30, 31, 32) zum automatischen Endsichern der Stütze (21) beim Ankoppeln des Fahrzeugteils (2) an das Basisfahrzeug (1) vorgesehen sind.

9. Straßenfahrzeug nach einem der Ansprüche 1-8, dadurch gekennzeichnet, daß am Fahrzeugteil (102, 133, 135) in ihrer Länge verstellbare und jeweils wenigstens ein Rad (113) aufweisende Stützen (111) vorgesehen sind, die aus einer Gebrauchsstellung in eine Nichtgebrauchsstellung schwenkbar sind, wobei vorzugsweise die an den Stützen (111) vorgesehen Räder (113) mit Bremsen versehen sind.

10. Straßenfahrzeug nach einem der Ansprüche 1-9, gekennzeichnet durch eine weitere, vorzugsweise abnehmbar am Fahrzeugteil (102, 133, 135) vorgesehene, in ihrer Länge verstellbare Stütze (25), die ein lenkbares Rad (26) trägt.

11. Straßenfahrzeug nach einem der Ansprüche 1-10, dadurch gekennzeichnet, daß am Basisfahrzeug (101) sowie am Fahrzeugteil (102, 133, 135) Sicherheits-Sperr-Elemente (136, 137) vorgesehen sind, die ein vollständiges Trennen des Basisfahrzeugs (101) von dem Fahrzeugteil (102, 133, 135) erst dan ermöglichen, wenn zumindest die vorderen Stützen (111) des Fahrzeugteils (102, 133, 135) aus ihrer Nichtgebrauchsstellung in die Gebrauchsstellung geschwenkt sind, wobei die Sicherheits-Sperr-Elemente vorzugsweise von jeweils einem Sicherheitsanschlag oder Sicherheitszapfen (136) an der jeweiligen Stütze (111) sowie von einem Gegenanschlag am Basisfahrzeug (101), bevorzugt am Hilfsrahmen (114) des Basisfahrzeugs (101) gebildet sind.

12. Straßenfahrzeug nach einem der Ansprüche 1-11, dadurch gekennzeichnet, daß das Basisfahrzeug (1, 101) einen Front- oder Allradantrieb aufweist.

## Fig.1

## Fig.2

EP 0 317 966 A1

Fig.3

Fig.4

Fig.5

Fig.6

Fig.8

Fig.9

EP 0 317 966 A1

Fig.7

EP 0 317 966 A1

Fig.10

Fig.11

## Fig.12

## Fig.13

Fig.14

EP 0 317 966 A1

Fig.15

Fig.16

Fig.17

Fig.19

Fig.18

## Fig.20

## Fig.21

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 719 244 (MILLER et al.) <br> * Figuren 5, 6 * | 1 | B 60 P 3/32 |
| X | | 2, 4 - 6 | |
| Y | US-A-3 000 455 (MAYFIELD) <br> * Figuren 4, 5 * | 1 | |
| X | DE-A-2 901 435 (SCHALMATH) <br> * Ansprüche 1, 4; Figuren 1, 2 * | 7 | |
| A | DE-A-2 215 973 (BAUER) <br> * Anspruch 2; Figur b * | 8, 10 | |
| A | US-A-3 980 313 (MEINECKE) <br> * Figuren 1 - 3, 4, 6 * | 5, 7, 8 | |
| A | CH-A- 586 125 (PURTSCHERT) <br> ----- | | |
| | | | **RECHERCHIERTE SACHGEBIETE (Int. Cl.4)** <br><br> B 60 P 3/00 |

Der vorliegende Recherchenbericht wurde für alle Patentansprüche erstellt

| Recherchenort | Abschlußdatum der Recherche | Prüfer |
|---|---|---|
| BERLIN | 13-02-1989 | LUDWIG H J |